Europäisches Patentamt

European Patent Office

Office européen des brevets

(19)

(11) Veröffentlichungsnummer: 0 247 518
A2

(12) # EUROPÄISCHE PATENTANMELDUNG

(21) Anmeldenummer: 87107393.8

(22) Anmeldetag: 21.05.87

(51) Int. Cl.⁴: **G21C 9/00** , **G21D 3/04**

(30) Priorität: 24.05.86 DE 3617524

(43) Veröffentlichungstag der Anmeldung:
02.12.87 Patentblatt 87/49

(84) Benannte Vertragsstaaten:
**CH FR GB LI SE**

(71) Anmelder: **Kernforschungsanlage Jülich
Gesellschaft mit beschränkter Haftung
Postfach 1913
D-5170 Jülich 1(DE)**

(72) Erfinder: **Wolters, Johannes-Peter, Dr.
Hermann-Hesse-Strasse 3
D-5160 Düren(DE)**
Erfinder: **Escherich, Karl-Heinz
Eisenmühlenstrasse 32
D-5180 Eschweiler(DE)**

(54) **Vorrichtung zur temperaturabhängigen Druckentlastung von Druckbehältern.**

(57) Die Erfindung bezieht sich auf eine Vorrichtung zur temperaturabhängigen Druckentlastung von Druckbehältern, bei der ein in einer Abgasleitung des Druckbehälters vorgesehenes Absperrorgan bei einer vorgegebenen Temperatur geöffnet wird. Ziel ist es, eine derartige Vorrichtung zu schaffen, die automatisch und mit hoher Zuverlässigkeit arbeitet und die ohne zusätzliche Hilfsenergie auskommt. Die Lösung dieser Aufgabe besteht in einem von der Temperatur des Druckbehälters beaufschlagten länglichen Konstruktionselement, dessen eines Ende ortsfest fixiert und dessen anderes in Abhängigkeit von der Temperaturausdehnung ausgelenktes Ende mechanisch mit dem Absperrorgan verbunden ist. Bei einer besonderen Ausführungsform der Vorrichtung ist der Druckbehälter selbst das Konstruktionselement, bei einer anderen Ausführungsform eine benachbart zu dem Druckbehälter angeordnete Stange.

FIG. 2

## Vorrichtung zur temperaturabhängigen Druckentlastung von Druckbehältern

Die Erfindung bezieht sich auf eine Vorrichtung zur temperaturabhängigen Druckentlastung von Druckbehältern, bei der ein in einer Ablaßleitung des Druckbehälters vorgesehenes Absperrorgan bei einer vorgegebenen Temperatur geöffnet wird.

Derartige Druckbehälter mit ggf. inneren Wärmequellen sollen dann, wenn die Behältertemperatur den vorgegebenen Wert erreicht hat, druckentlastet werden. Dieser Fall kann beispielsweise eintreten, wenn die vorhandene automatische Kühlung ausfällt.

Solche Behälter findet man z.B. bei kleinen Hochtemperaturreaktoren. Diese Reaktoren haben Stahldruckbehälter, die bei Betriebsdruck nicht über 400 °C aufgeheizt werden dürfen. Kleine Hochtemperaturreaktoren sind so konstruiert, daß die durch den Zerfall der radioaktiven Spaltprodukte entstehende Nachwärmeleistung bei Ausfall der Zwangskühlung über die Behälteroberfläche an den Behälter umgebende Flächenkühler abgegeben wird, ohne daß zulässige Temperaturen im Inneren des Behälters oder in der Behälterwand überschritten werden. Nur bei Ausfall der redundanten Flächenkühler steigt die Behältertemperatur über 400 °C an. Ein solcher Fall ist zwar sehr unwahrscheinlich, stellt aber den einzigen Mechanismus dar, der die Integrität des Reaktordruckbehälters gefährden könnte.

Üblicherweise wird der Druckbehälter von einem oder mehreren im Ansprechdruck gestaffelten Sicherheitsventilen nur vor zu hohem Druck geschützt. Zum Stand der Technik gehören Sicherheitsventile, die sich über einen Antrieb gegen die Schließkraft öffnen lassen. Nachteilig bei diesen Ventilen ist, daß Steuerungsfehler zu einem unbeabsichtigten Öffnen des Primärkreislaufs führen können. Außerdem ist man beim Öffnen auf Hilfsenergie angewiesen.

Aufgabe der Erfindung ist es, eine Vorrichtung zur Druckentlastung von Behältern der eingangs bezeichneten Art zu schaffen, mittels der der Behälter bei Überschreiten der zulässigen Temperatur automatisch und mit hoher Zuverlässigkeit über die Absperrorgane geöffnet wird, ohne daß zusätzliche Hilfsenergie benötigt wird.

Diese Aufgabe wird gemäß der Erfindung dadurch gelöst, daß ein von der Temperatur des Druckbehälters beaufschlagtes längliches Konstruktionselement vorgesehen ist, dessen eines Ende ortsfest fixiert und dessen anderes in Abhängigkeit von der Temperaturausdehnung ausgelenktes Ende mechanisch mit dem Absperrorgan verbunden ist.

Dabei wird die Wärmeausdehnung des Konstruktionselementes, das sich im Temperaturbereich des Behälters befindet, zur Betätigung des Absperrorgans genutzt.

Eine vorteilhafte Ausführungsart der Vorrichtung gemäß der Erfindung besteht darin, daß der Druckbehälter selbst das Konstruktionselement ist. Der Behälter kann beispielsweise ein aufrecht stehender langer Stahlzylinder sein, der an seinem unteren Ende ortsfest fixiert ist. Demzufolge verschiebt sich der obere Teil des Behälters bei Aufheizung des Behälters nach oben. Neben dem Behälter ist beispielsweise eine Wand angeordnet, die ebenfalls auf der Auflage (Boden) ortsfest fixiert ist. Der Behälterabschluß und ein Punkt entsprechender Höhe der Wand sind relativ zueinander beweglich. Sie sind mit einer Hebelmechanik miteinander verbunden, die die Relativbewegung der Punkte aufnimmt. Übersteigt die Relativbewegung ein bestimmtes Maß, so wird über den Hebelmechanismus beispielsweise ein federbelastetes Sicherheitsventil geöffnet.

Die Relativbewegung der beweglichen Punkte kann selbstverständlich auch zur Öffnung anderer Absperrorgane verwendet werden. Naheliegende Beispiele sind: das Durchstoßen einer Platzmembrane oder das Öffnen einer Rückschlagklappe gegen den anstehenden Behälterdruck.

Eine weitere Ausführungsart der Vorrichtung gemäß der Erfindung besteht darin, daß das Konstruktionselement eine benachbart zu dem Druckbehälter angeordnete Stange ist. Die Stange kann in einem Rohr frei beweglich geführt sein, wobei beide an einem Ende miteinander verbunden sind. Behälter und Stange bestehen aus Werkstoffen unterschiedlicher Wärmeausdehnung und sind so angeordnet, daß beide über die Behälterwand auf die gleiche Temperatur aufgeheizt werden. Steigt die Temperatur, so verschieben sich die freien Körperenden (der obere Abschluß des Behälters und das freie Ende des Stabes) relativ zueinander. Diese Verschiebung wird auf den Stößel eines Sicherheitsventils übertragen, wenn sie ein bestimmtes Maß übersteigt. Das Sicherheitsventil wird so geöffnet.

Die Vorrichtung gemäß der Erfindung zeichnet sich durch ihre völlig autonome Funktion aus. Es ist weder eine Steuerung noch eine Hilfsenergie erfoderlich, da die zu überwachende Behältertemperatur über die Wärmedehnung des Behälters selbst oder über wärmetechnisch an den Behälter angekoppelte Expansionskörper (das Konstruktionselement) unmittelbar zur Durchführung der notwendigen Schutzaktion verwendet wird. Dies garantiert eine hohe Zuverlässigkeit im Anforderungsfall. Da die Vorrichtung in Verbindung mit einem ohnehin vorhandenen Sicherheitsventil verwendet wird und der Mechanismus außer durch Temperaturüberschreitung des Behälters nicht wirksam werden kann, wird die Wahrscheinlichkeit für ein zufälliges Öffnen des Behälters praktisch nicht erhöht. Eine Überwachung der Funktionsbereitschaft während des Betriebes wie bei einem pneumatischen oder hydraulischen Antrieb ist nicht erforderlich. Der technische Aufwand als ganzes und die damit verbundenen Kosten sind außerordentlich gering, obwohl ein beträchtliches Maß an zusätzlicher Sicherheit erreicht wird.

Ausführungsbeispiele der Vorrichtung gemäß der Erfindung sind in der Zeichnung schematisch dargestellt und werden im folgenden näher erläutert:

Es zeigen:

Figur 1 eine aus Behälter und daneben angeordneter Wand mit Zwischenmechanik bestehende Vorrichtung gemäß der Erfindung;

Figur 2 eine aus Rohr und darin beweglich angeordnetem Stab bestehende Vorrichtung gemäß der Erfindung.

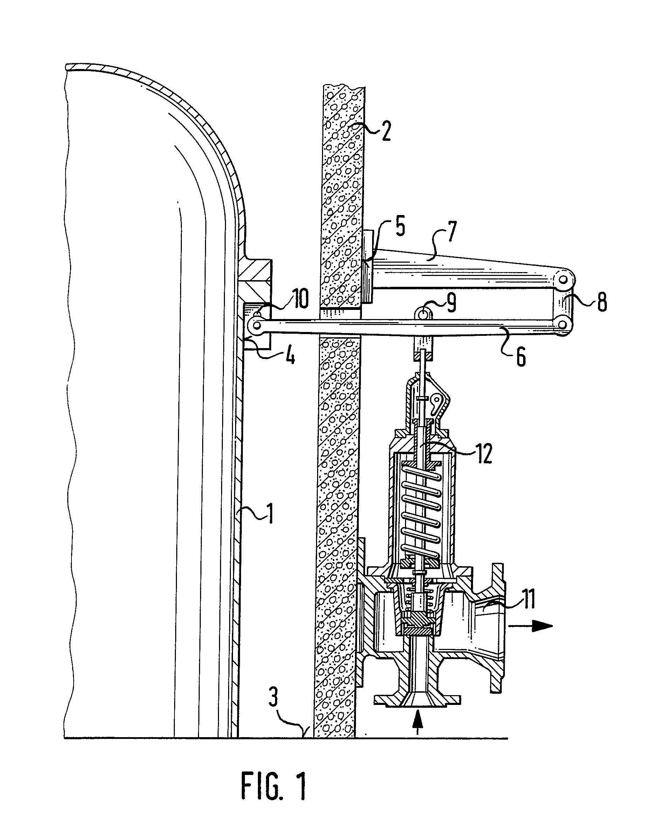

Bei der in Fig. 1 dargestellten Vorrichtung ist der senkrecht stehende zylindrische Stahldruckbehälter 1 selbst das Konstruktionselement, neben dem die Wand 2 angeordnet ist. Druckbehälter und Wand sind auf dem Boden 3 ortsfest fixiert. An den beweglichen Punkten 4 und 5 von Behälter bzw. Wand ist die aus den Teilen 6 - 9 bestehende Zwischenmechanik angebracht. Hebel 6 ist dabei mit einem vertikalen Spiel am beweglichen Punkt 4 des Behälters 1 angelenkt, und das vertikale Spiel (bedingt durch Öse 10) ist so ausgebildet, daß der Anlenkpunkt des Hebels 6 erst oberhalb einer bestimmten Wärmedehnung des sich nach oben ausdehnenden Behälters bewegt wird. Das andere Ende des Hebels ist durch die Betonwand 2 und den Kragbalken 7 in vertikaler Richtung fixiert. Der Gelenkhebel 8 verhindert eine horizontale Fixierung des Behälters und stellt dadurch sicher, daß der Mechanismus im Erdbebenfall nicht belastet wird.

Das federbelastete Sicherheitsventil 11 wird ebenfalls durch die Wand 2 fixiert. Das hat zur Folge, daß der Ventilstößel 12 des Sicherheitsventils 11 über das Gelenkteil 9 angehoben wird, sobald die Wärmedehnung des Behälters das am Behälter angelenkte Ende des Hebels 6 nach oben verschiebt.

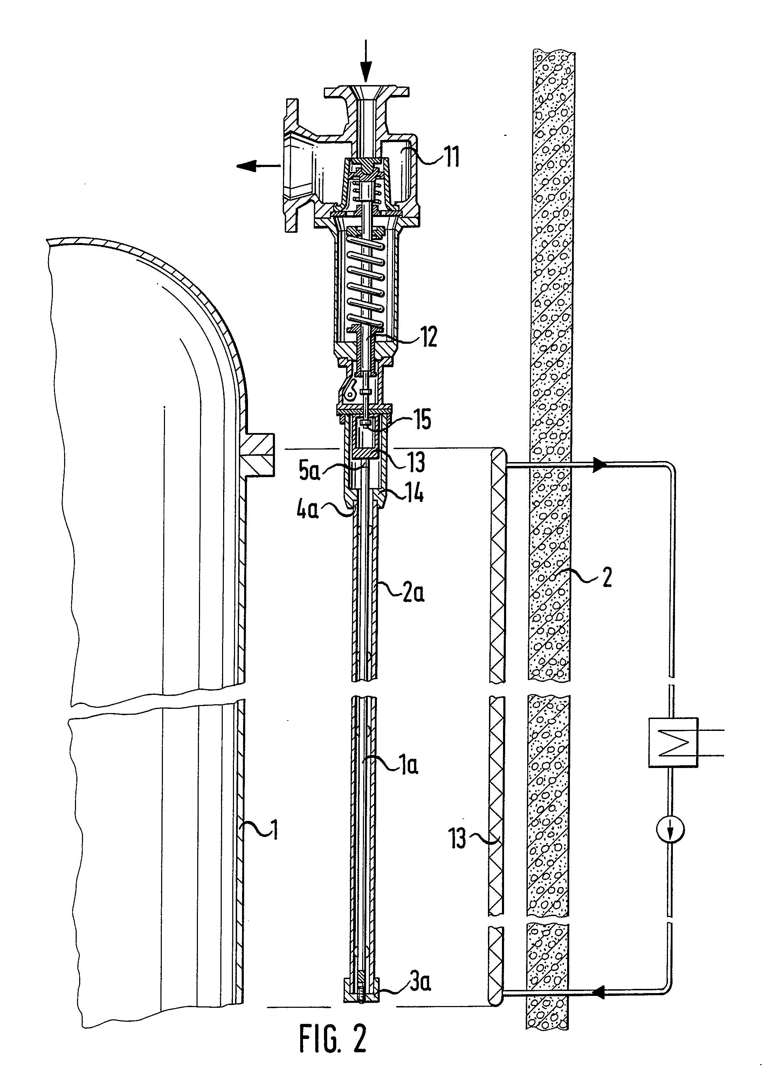

Fig. 2 zeigt eine Ausführungsart der Vorrichtung, bei der das Konstruktionselement aus einer in einem äußeren Rohr 2a innengeführten Stange 1a besteht, wobei Rohr und Stange an ihren unteren Enden durch die Verschraubung 3a fest miteinander verbunden sind. Die Punkte 4a des Rohres und 5a der Stange 1a sind beweglich. Die Werkstoffe von Rohr und Stange sind so gewählt, daß das Rohr einen höheren Wärmeausdehnungskoeffizienten aufweist als die Stange. Das bedeutet, daß bei Erwärmung der beiden Körper der mit dem oberen Ende der Stange 1a verbundene Greifer 13 tiefer in die mit dem Rohr verbundene Hülse hineingezogen wird. Ab einer bestimmten Tiefe erfaßt der Greifer 13 die Mutter 15 des Ventilstößels 12 und öffnet damit das Sicherheitsventil 11.

Die Vorrichtung ist in dem Spalt zwischen dem zu schützenden Behälter 1 und den auf der Innenoberfläche der Wand 2 befindlichen Flächenkühlern 13 angeordnet. Eine ausreichende Wärmeankopplung an den Behälter ist dadurch gegeben. Dies liegt daran, daß sich im Spalt bei Ausfall der Flächenkühler annähernd die Temperatur der Behälterwand einstellt. Der Temperaturanstieg in der Behälterwand geht außerdem so langsam von statten, daß die Wärmedehnungskörper dieser Temperaturentwicklung ohne großen Temperaturunterschied folgen können.

## Ansprüche

1. Vorrichtung zur temperaturabhängigen Druckentlastung von Druckbehältern, bei der ein in einer Ablaßleitung des Druckbehälters vorgesehenes Absperrorgan bei einer vorgegebenen Temperatur geöffnet wird,
**dadurch gekennzeichnet,**
daß ein von der Temperatur des Druckbehälters beaufschlagtes längliches Konstrutionselement (1, 1a) vorgesehen ist, dessen eines Ende ortsfest fixiert und dessen anderes in Abhängigkeit von der Temperaturausdehnung ausgelenktes Ende mechanisch mit dem Absperrorgan (11) verbunden ist.

2. Vorrichtung nach Anspruch 1,
**dadurch gekennzeichnet,**
daß das Konstruktionselement der Druckbehälter (1) ist.

3. Vorrichtung nach Anspruch 1,
**dadurch gekennzeichnet,**
daß das Konstruktionselement eine benachbart zu dem Druckbehälter angeordnete Stange (1a) ist.

FIG. 1

FIG. 2